# EUROPEAN PATENT APPLICATION

(11) **EP 0 645 725 A2**
(43) Date of publication of application: **29.03.1995**
(21) Application number: 94307044.1
(22) Date of filing: 27.09.1994
(51) Int. Cl.: G06F 17/60

(54) **Storing video data in a computer system**

(30) Priority: 28.09.1993 US 128018
(71) Applicant: NCR International, Inc., Dayton, Ohio 45479 (US)
(72) Inventor: Alonso-Cedo, Teodoro G., Aurora, Illinois 60506 (US); Czvitkovicz, Gary A., Lisle, Illinois 60532 (US); Satterfield, Mark A., Bolingbrook, Illinois 60440 (US)
(74) Representative: Robinson, Robert George

(57) **Abstract**

In a computer system including a plurality of interlinked computers, the computers have respective video cameras associated therewith, whereby video pictures of a person associated with each computer can be transmitted to the other computers. Each computer maintains a database of records containing information concerning the other computers in the system. Each such record can contain data representing an image of a person associated with the relevant remote computer, captured from the video information transmitted from that computer.

## Description

This invention relates to a computer system including a plurality of interlinked computers.

Modern telephones systems allow multiple parties at different locations to hold a conference. However, telephone conferences do not provide all of the conveniences of a face-to-face conference, where participants all meet at a common table in a meeting room. For example, in a meeting room, participants can view an object of interest, such as a drawings or a product. Such viewing is not possible in a telephone conference.

It is an object of the present invention to provide a method of operating a computer whereby a record can be maintained efficiently, of other computers with which the computer can communicate.

Therefore, according to the present invention, there is provided a method of operating a computer, characterized by the steps of: establishing a database containing records of other computers with which said computer can communicate; and storing in said records data representing visual images of persons associated with the respective other computers.

One embodiment of the present invention will now be described by way of example, with reference to the accompanying drawings, in which;-
Figure 1 illustrates three computers, connected by telephone lines.
Figure 2 initiates an example, which will be elaborated in Figures 3-14. In the example, a calculator program is operated, and annotated, by various parties.
Figure 3 illustrates how the system responds when a host user attempts to operate the calculator, in Annotation mode.
Figure 4 illustrates how the system responds when a host user attempts to annotate the calculator, in Annotation mode.
Figure 5 illustrates how the system responds when a host user attempts to operate the calculator, in Application mode.
Figure 6 illustrates how the system responds when a host user attempts to operate the calculator, in Local Annotation mode.
Figure 7 illustrates how the system responds when a host user attempts to annotate the calculator, in Local Annotation mode.
Figure 8 illustrates how the system responds to a host user when in view mode.
Figure 9 illustrates how the system responds when a remote user attempts to operate the calculator, in Annotation mode.
Figure 10 illustrates how the system responds when a remote user attempts to annotate the calculator, in Annotation mode.
Figure 11 illustrates how the system responds when a remote user attempts to operate the calculator, in Application mode.
Figure 12 illustrates how the system responds when a remote user attempts to operate the calculator, in Local Annotation mode.
Figure 13 illustrates how the system responds when a remote user attempts to annotate the calculator, in Local Annotation mode.
Figure 14 illustrates how the system responds to a remote user when in View mode.
Figure 15 and 15A illustrate logic flow used by the system.
Figure 16 illustrates a representative entry for a directory.

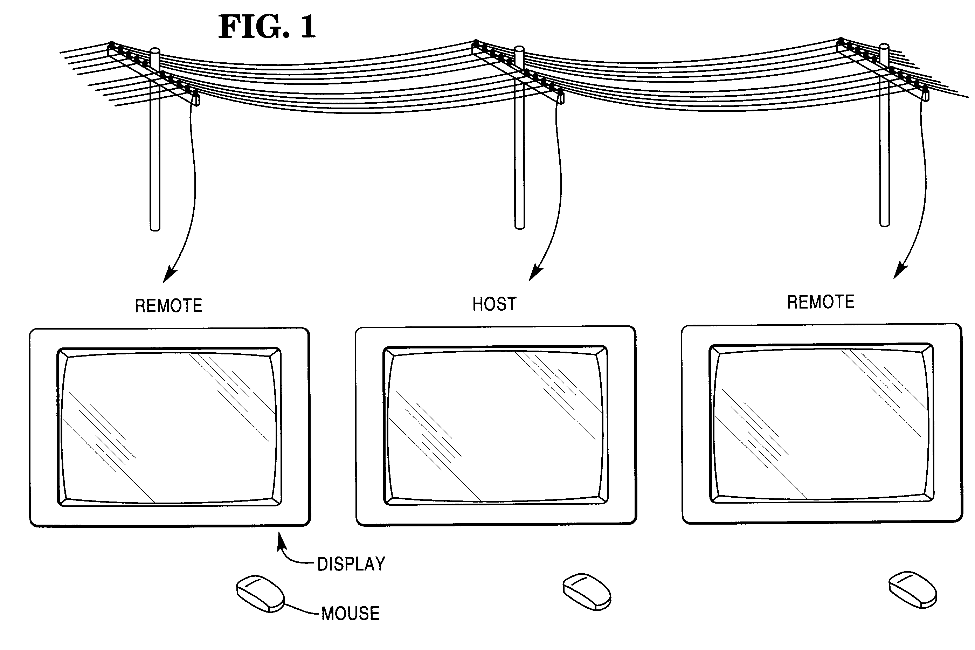

Figure 1 shows three computers connected by telephone links. Each computer runs a message-driven, multi-tasking, Graphical User Interface (GUI), such as that sold under the name Windows, available from Microsoft Corporation, located in Redmond, Washington. Such GUIs are also called operating environments.

The user of a GUI interacts with a program by way of windows. Selected windows, rather than the entire display, are replicated at the remote computers. This selective replication allows users to maintain private areas on their displays, which are not shared. Each computer also runs software which effects the operations described herein. In addition, one computer (the Host) runs an Application program. (It is possible for the Host to run both programs because of the multi-tasking capabilities of the GUI.)

There are four basic modes of operation:

### 1. Application Mode

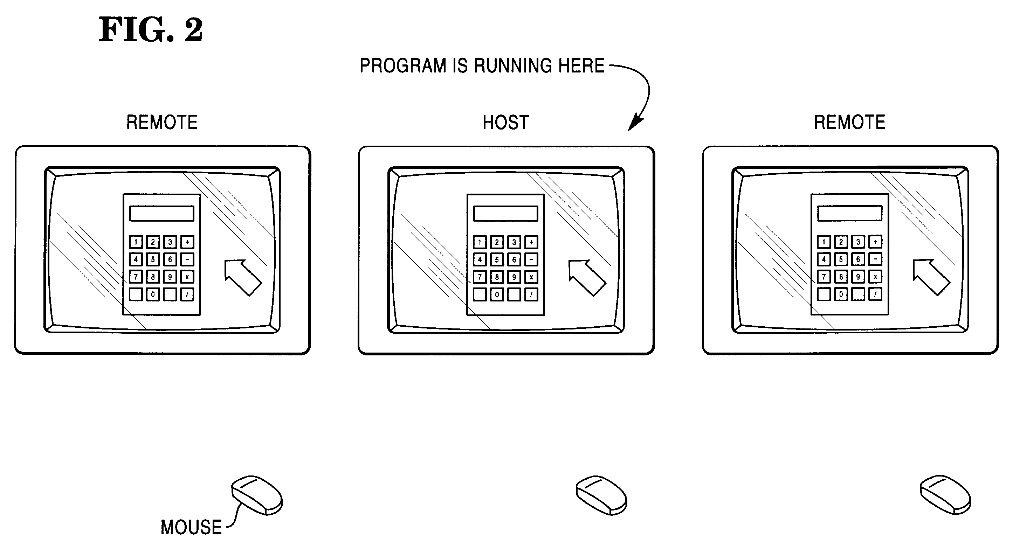

Any user of the three computers in Figure 1 can issue commands to the Application program. For example, assume the Application program is one which simulates a hand-held calculator. The initial situation is shown in Figure 2, where each computer display shows the calculator. Assume that the following events occur:
The user of the Host presses the "3" button on the calculator (either by keyboard input, or mouse input, depending upon the design of the calculator program).
In response, each calculator, in its display area, shows a "3".
The user of one Remote presses "+".
The user of the other Remote presses "6".
The user of the Host presses "=".

At this point, all calculators will display "9", which is the sum of 3 and 6. The users collectively operated the calculator program, and the display of each shows the result.

The calculator program does not care which users pressed the buttons, nor whether some users pressed no buttons, provided a legal sequence of buttons was received. (It is assumed that the users are cooperative, and that no users try to sabotage operation of the calculator.)

### 2. Annotation Mode

Any user can draw on the user's own, local, display, using drawing tools similar to those found in a "paint" program. The user can draw boxes, circles, arcs, text, ellipses, and so on. The user can also erase items on the display.

The user's annotations are replicated on all other displays, so that all users view similar displays. However, the displays could be different, because of the following factors:
(A) Different display monitors have different properties, such as resolution and color capability.
(B) Different display protocols (EGA, VGA, etc.) represent graphics images differently, and have different color capabilities.
(C) Different GUIs, or different versions of the same GUI, may have different display conventions. Different computers in Figure 1 could run the different GUIs.
(D) Some users have changed the size of the window in which their calculator is displayed, causing a deviation in scaling.

These differences can cause differences in the appearance of the displayed images, relative to each other, but the basic content of all displays should be the same. To accommodate size differences, the displays may be drawn to different scales as appropriated.

### 3. Local Annotation Mode

A user can annotate the local display, but the annotations are kept private, and no other user can see the annotations.

### 4. View Mode

No users can annotate, nor can they issue commands. However, an action resembling annotation can be taken. Users can move their cursors, and others will see the movement, allowing remote pointing. View Mode is useful in one embodiment, wherein, for example, Annotate Mode is in force, but a specific user's mode is designated as View. In this embodiment, all users can annotate, but the "View" user can only watch, and cannot annotate.

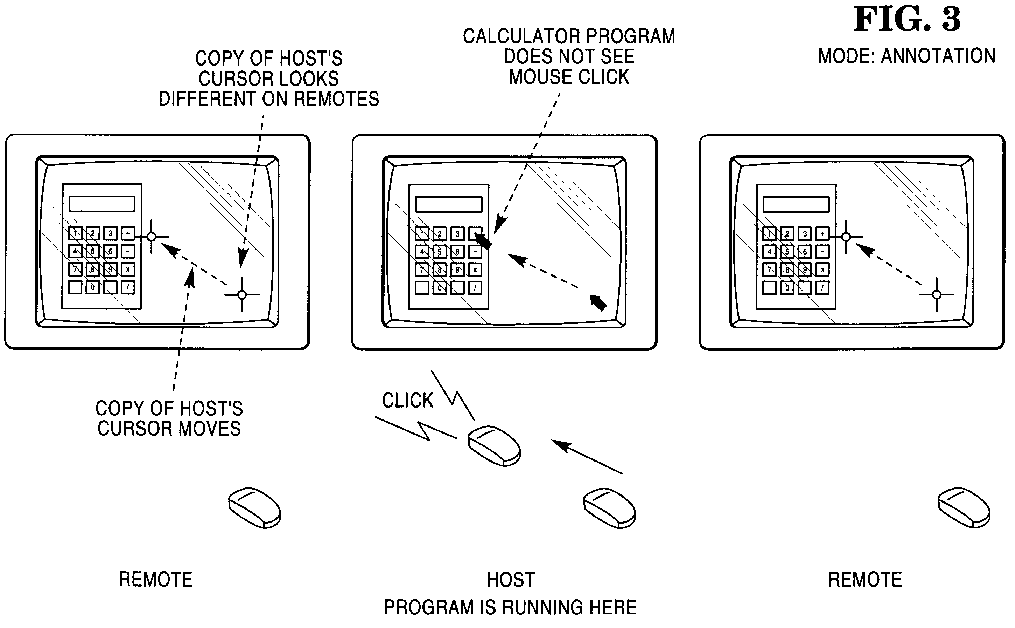

Figures 3-14 will illustrate the different modes, by way of example, using the calculator program.

Referring to Figure 3, there is shown the situation where the host runs on application program; the mode is "Annotation"; the user input is at the host computer; and the user attempts to operate the calculator.

Assume that the user of the host computer attempts to add two numbers, using the calculator. Attempted entry of the first number will be considered.

The user, located at the Host, moves the Host's cursor over a key of the calculator, as shown in Figure 3, and tries to depress the key, by clicking the mouse. However, the mouse click is blocked and does not reach the Application program. The Application program does not respond, because it receives no mouse click.

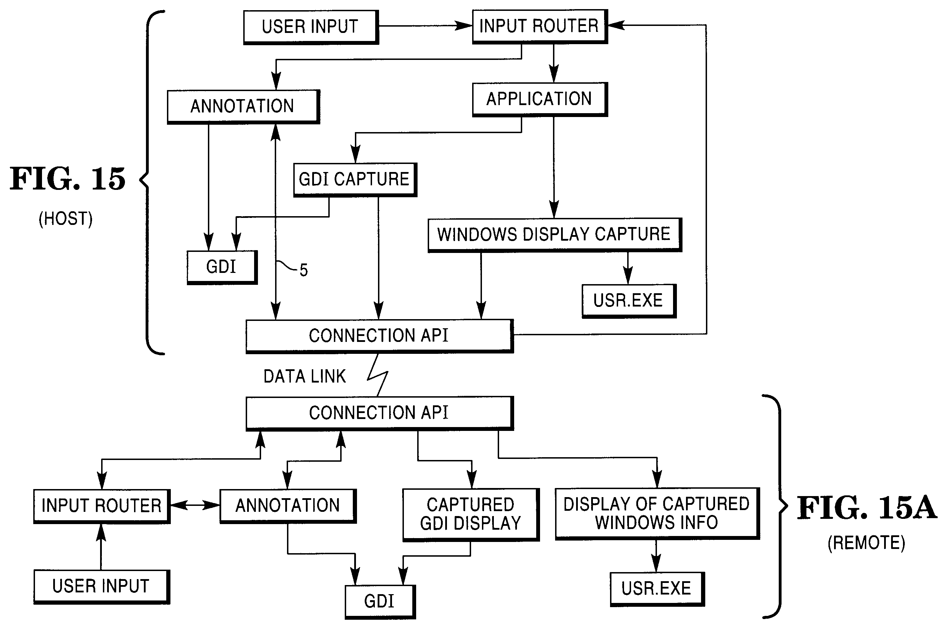

That is, in more detail, the GUI detects the mouse movement, and causes "mouse messages" to be generated. The GUI places the mouse messages into a queue, where they await processing. INPUT ROUTER in Figure 15 reads these messages. Because "Annotation Mode" is currently in force, INPUT ROUTER directs the messages to ANNOTATION block. APPLICATION does not receive the messages and thus does not respond. The mouse click is ignored.

ANNOTATION can be configured to respond to two (or more) ways to the mouse messages. In one configuration, annotation requires the mouse to initially select an ANNOTATION TOOL. If no selection is done, ANNOTATION ignores mouse messages.

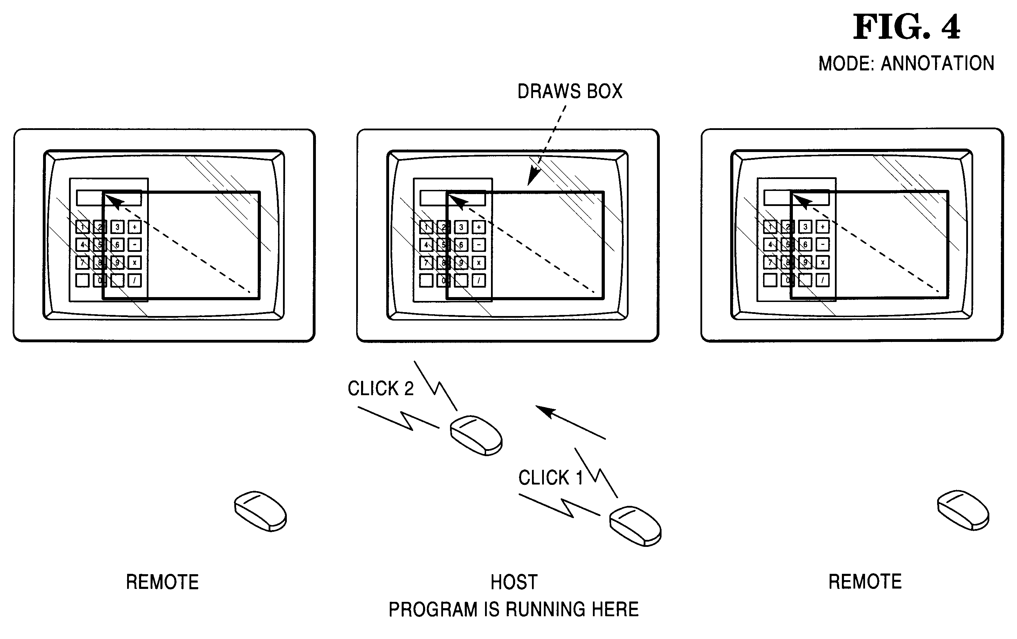

Selection is done by clicking the mouse over an image of the tool, as is commonly done in "paint" programs. ANNOTATION recognizes this tool selection, and then treats subsequent mouse clicks as data for drawing with the selected tool. For example, if a rectangle tool were selected, the next two mouse clicks would define the diagonal corners of the rectangle. (Figure 4, later discussed, illustrates drawing a rectangle.)

Under the second configuration, a default tool, such as a pen, is automatically selected when in Annotation Mode. In this configuration, when the user tries to depress a calculator button (by clicking on it), the user (unintentionally) initiates drawing of a line, using the pen. When the user recognizes this, the user can terminate drawing of the line, in any of several known ways.

Therefore, in Annotation Mode, the system either (a) responds to mouse input by initiating a draft annotation, or (b) ignores the mouse input, because an annotation tool was not selected. Keyboard input from the user is treated the same way. Of course, other responses by ANNOTATION can be designed.

Each display shows a cursor whose position is controlled by the associated mouse. Each cursor is replicated on all displays. Thus, in Figure 3, with three mice, there are three cursors on each display (only one is shown for simplicity). Consequently, when one user moves a mouse, the corresponding cursor moves on all displays. In general, the three cursors are distinguishable: each cursor identifies its owner, as by color, shape, inclusion of a label, or the like.

Referring to Figure 4, there is shown the situation where the host runs an application program; the mode is "Annotation"; the user input is at the host computer; and the user attempts to draw a box over the calculator.

This situation is quite similar to that of Figure 3, except that, now, the user intends to draw an annotation, instead of intending to press a button, as in Figure 3.

Assume that the user of the host computer draws a box over the calculator. (The box is shown overly large, for emphasis. It is preferred that the box not extend beyond the calculator itself.) The box is replicated on the remote computers. (The box is drawn using annotation tools, which are not shown.)

In terms of Figure 15, INPUT ROUTER directs the logic flow to ANNOTATION. ANNOTATION call the proper GDI functions to draw the box. Also, ANNOTATION sends "annotation messages" to CONNECTION API, which delivers the annotation messages to the Remotes.

ANNOTATION in Figure 15A receives the annotation messages. This ANNOTATION block represents the logic executed at each remote computer. This ANNOTATION calls the proper GDI functions, via the block GDI.

"GDI" is an acronym for Graphical Device Interface. "GDI functions" are small programs, contained in a larger program of the GUI called GDI.EXE. A GDI function, when called, draws a specific graphic image, such as a circle, box, or text, based on subsequent input from the user. Other GDI functions perform other tasks, such as selecting pen widths.

GDI.EXE is a commercially available product. Technical details concerning GDI.EXE are contained in "Windows Software Development Kit," available from Microsoft Corporation, and in Programming Windows 3.1 by Charles Petzold (Microsoft Press, Redmond, Washington, 1992, ISBN 1-55615-395-3).

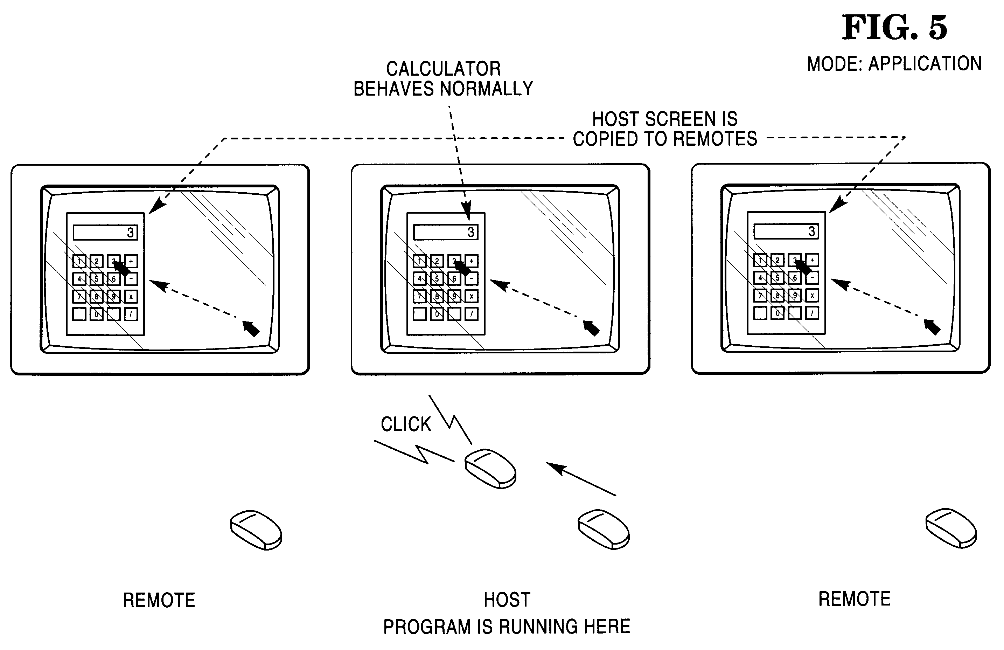

Referring to Figure 5, there is shown the situation where the host runs an application program; the mode is "Application"; the user input is at the host computer; and the user attempts to use the calculator.

The user of the Host moves the cursor over the calculator key "3" and clicks the mouse. The GUI generates a mouse message and places it into the queue. The mouse message is read, and passed to the Application program (ie, the calculator program), which responds by (1) showing that the key "3" is depressed and (2) drawing the numeral "3" in the calculator's display, using GDI calls. The Application program also records the fact that the user enters a "3", for its own internal operations.

The GDI calls made by the Application program in drawing the "3" in the calculator, and in drawing the depressed "3" button are intercepted, and notified to the other computers. The other computers replicate the Host display, by executing the same GDI functions. Greater detail concerning this GDI interception is given later.

Thus, all users simultaneously see the user of the Host operate the calculator. (The action is not exactly simultaneous, because extremely short delays are involved. However, a human probably could not detect the delays if the Host and the Remote were operating side-by-side.)

In terms of Figure 15, the INPUT ROUTER recognizes that the mouse messages should be directed to the Application program, and directs the logic flow to APPLICATION (ie, the calculator program). APPLICATION (1) draws a depressed "3" key and (2) writes the numeral "3" on the calculator's display, by calling appropriate GDI functions.

However, the system, via GDI CAPTURE in Figure 15, captures the Application program's GDI calls, before they are executed. Two things are done with the captured calls. One, the other computers are notified of these calls, via the block CONNECTION API. This action leads to block CAPTURED GDI DISPLAY in Figure 15A, which causes each Remote to execute the same GDI functions, as indicated by block GDI. Two, the system allows the GDI functions, called by the Application program, to be executed at the host, via the block GDI in Figure 15. Therefore, GDI function calls made by the Application Program are captured and notified to the Remote computers, so that the Remotes can duplicate them. The captured calls are then executed as intended on the Host.

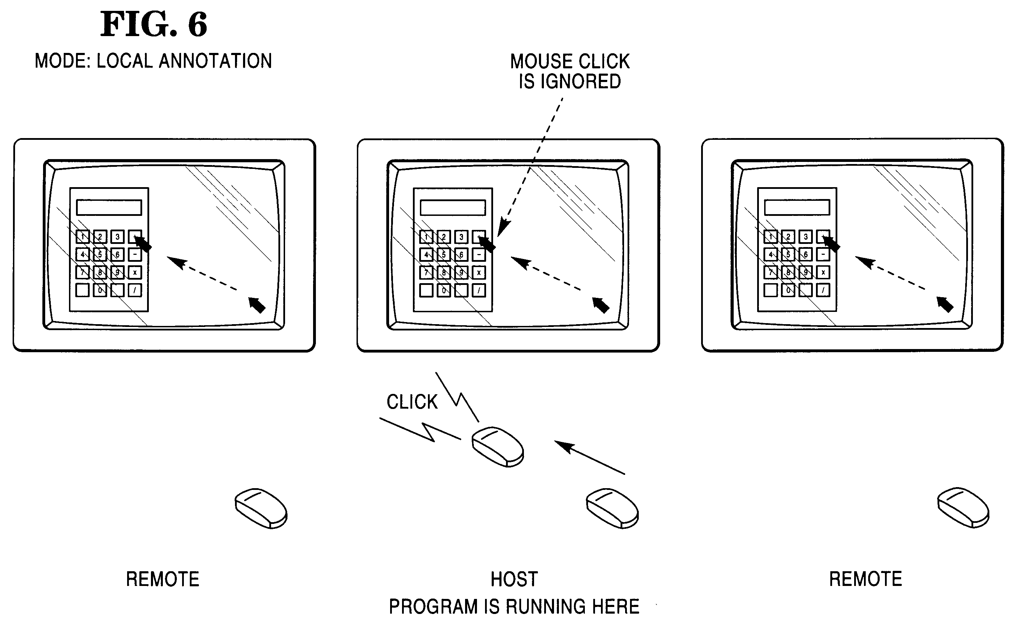

Referring to Figure 6, there is known the situation where the host runs an application program; the mode is "Local Annotation"; the user input is at the host computer; and the user attempts to operate the calculator.

Assume that in Annotation Mode, there is no default annotation tool given to the user. Under this assumption, if the user moves the cursor to a calculator button, and tries to "press" the button, the INPUT ROUTER in Figure 15 passes the mouse message to the annotation block. Since the mouse click is not part of a valid annotation input sequence (no tool was selected), ANNOTATION draws nothing. Further, the Remote computers do not show the movement of the cursor corresponding to the Host computer's mouse, as indicated, because line 5 in Figure 15 does not send Annotation Messages to the other computers when Local Annotation is in force. Further still, the calculator button is not re-drawn as a depressed button on the Host display, in response to the attempt to press it, because APPLICATION did not receive the mouse message. APPLICATION is responsible for drawing depressed calculator buttons.

If a default annotation is assigned to the user in Local Annotation Mode, the user's mouse click would initiate drawing by that tool. When the user realized the mistake, the user would terminate the drawing, in a known manner.

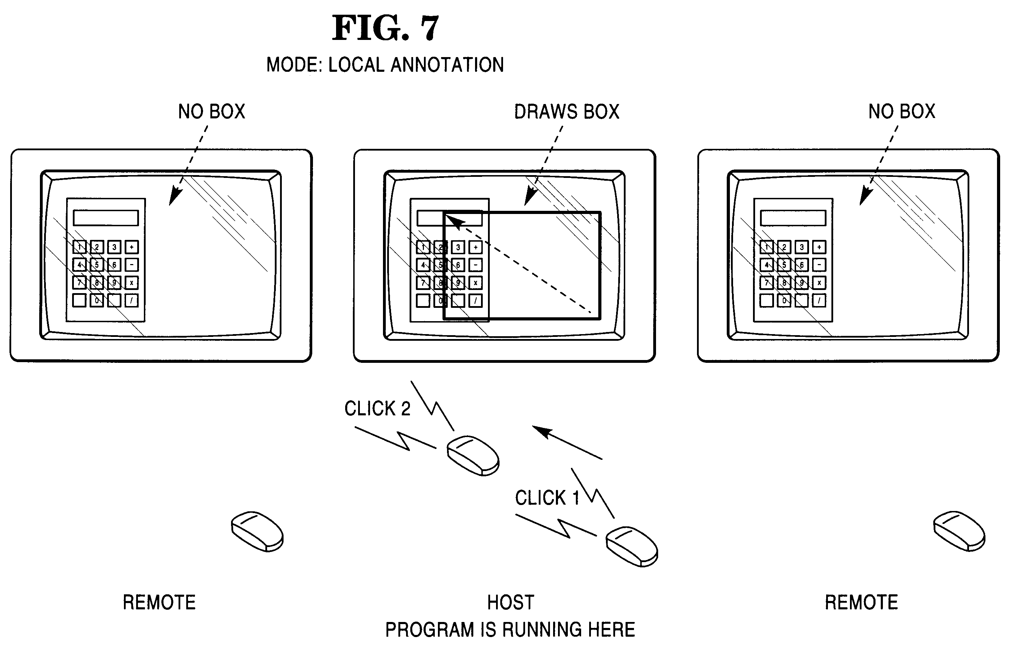

Referring to Figure 7, there is shown the situation where the host runs an application program; the mode is "Local Annotation"; the user input is at the host computer; and the user attempts to annotate the calculator. Under these conditions, the INPUT ROUTER in Figure 15 recognizes a valid attempt to perform annotation, as by drawing a box. The INPUT ROUTER directs the logic flow to the ANNOTATION block, which calls the proper GDI functions for drawing the annotation, namely, a box, as shown in Figure 7. However, because the annotation is local, no boxes are drawn on remote computers, as indicated in Figure 7. No data is sent along data path 5 in Figure 15.

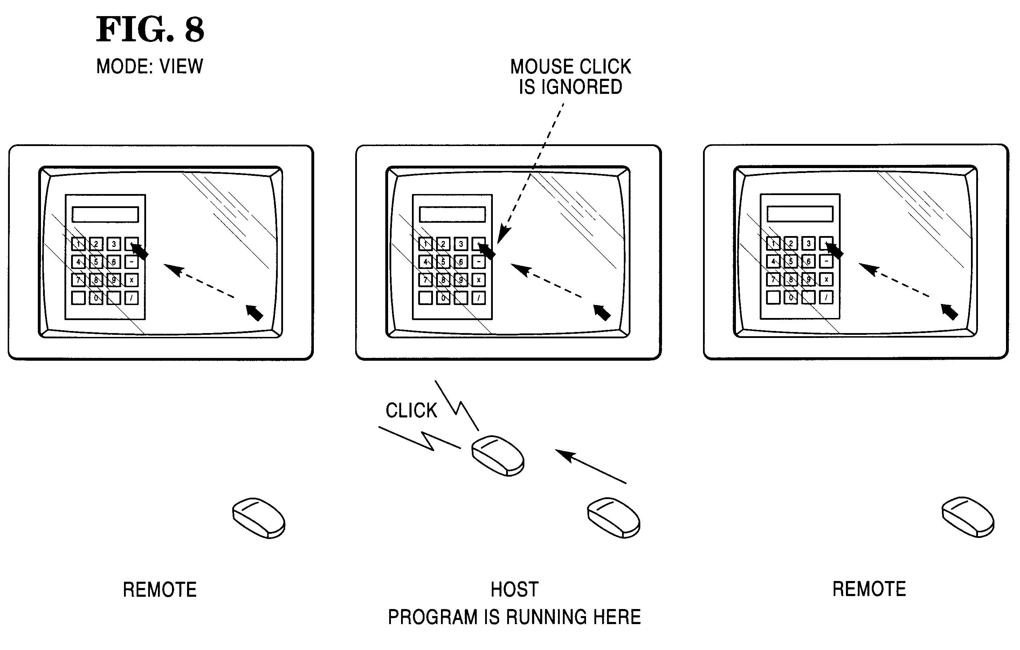

Referring to Figure 8, there is shown the situation where the host runs an application program; the mode is "View"; the user input is at the host computer; and the user attempts to operate the calculator. As Figure 8 indicates, the mouse click is ignored, and nothing happens at the Remotes. In Figure 15, the INPUT ROUTER reads the mouse message, but blocks it from APPLICATION, because the current mode is "view."

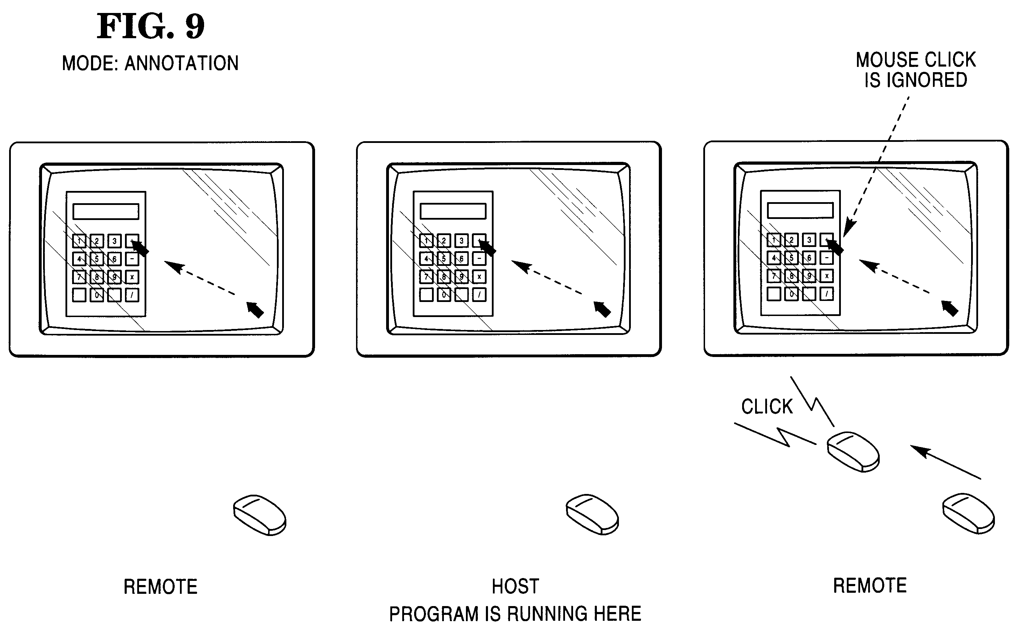

Referring to Figure 9, there is shown the situation where the host runs an application program; the mode is "ANNOTATION"; the user input is at a remote computer; and the user attempts to operate the calculator.

Assume that the user moves the mouse cursor over a calculator button and clicks the mouse. The mouse click is ignored. The other computers (Host and the other Remote) show the motion of the user's cursor, but nothing else, because no tool has been selected. In Figure 15A, the INPUT ROUTER blocks the mouse message from reaching APPLICATION. The logic is directed to ANNOTATION, which draws a cursor on the user's Remote display, via block GDI. ANNOTATION also sends data to CONNECTION API, which directs the logic to ANNOTATION in Figure 15. This ANNOTATION represents the annotation logic present on the two other computers: the Host and the other Remote. These ANNOTATION blocks draw cursors corresponding to the users cursor, at corresponding positions, via the GDI block in Figure 15, which represents GDI function calls. The Host can use one tool, such as a box-drawing tool, while a Remote can use a different tool, such as a circle-drawing tool.

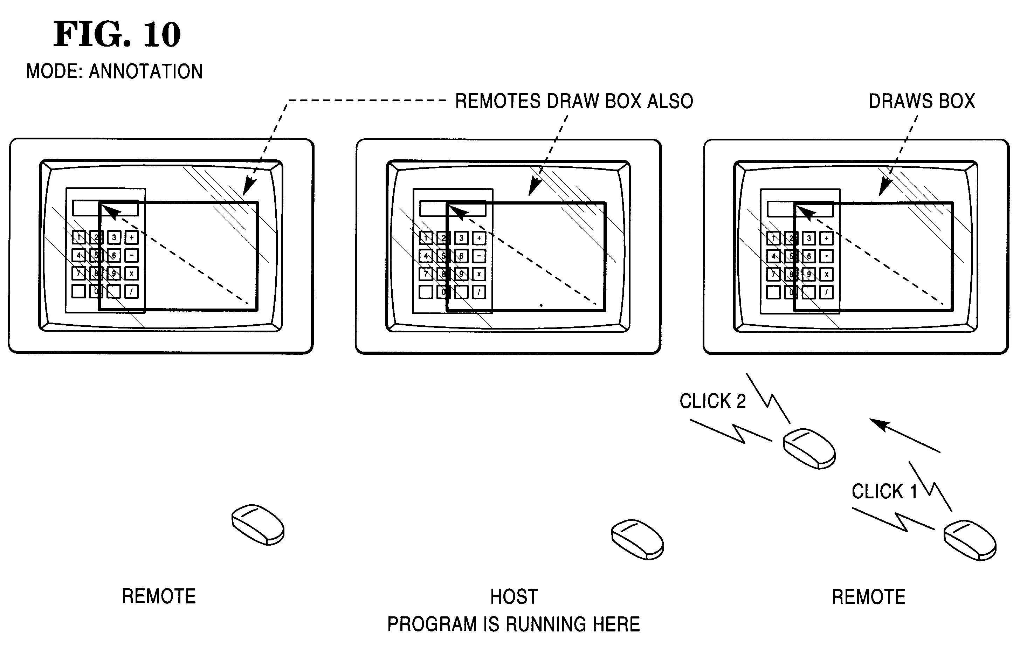

Referring to Figure 10, there is shown the situation where the host run an application program; the mode is "ANNOTATION"; the user input is at a remote computer; and the user attempts to annotate the calculator. Assume that the annotation is a box. A box is drawn on all displays. In Figure 15A, the INPUT ROUTER at the user's Remote directs the mouse messages to the block ANNOTATION. ANNOTATION does two things. One, it calls the proper GDI functions to perform the annotation, namely, drawing the box. Two, ANNOTATION sends annotation messages to CONNECTION API, which delivers the annotation messages to the other computers. However, one of these is the Host, and the other is a Remote. The logic at the Host reaches ANNOTATION in Figure 15, and the logic at the other Remote reaches ANNOTATION in Figure 15A.

Both of these ANNOTATION blocks cause the proper GDI functions to be called, to draw an annotation corresponding to the user's annotation. However, in the Host, logic path 5 is not taken at this time, because it is not necessary to replicate the Host's annotations at other computer.

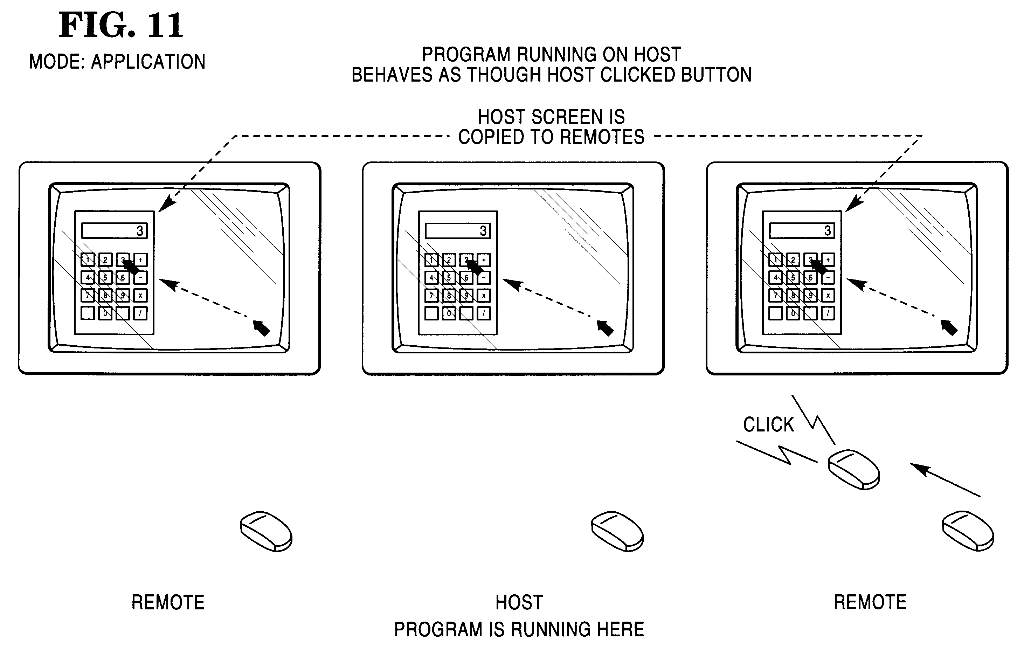

Referring to Figure 11, there is shown the situation where the host runs an application program; the user input is at a remote computer; and the user attempts to operate the calculator. It will be recalled that the calculator program is loaded only on the host, while a Remote user wishes to operate it.

The Remote user's INPUT ROUTER in Figure 15A routes the mouse messages to CONNECTION API. The Host receives these messages, which are delivered to the Host's INPUT ROUTER in Figure 15. The Host's INPUT ROUTER directs the messages to the block APPLICATION (ie, to the Application program, namely, the calculator program), which does two important things.

The calculator program treats the messages as though they were issued by the Host's mouse, even though a Remote mouse caused them. The calculator program responds in its usual way, which includes (1) showing a depressed calculator button "3", (2) writing the numeral "3" in the calculator's display, and (3) performing its own internal computations when it learns that the user entered data (namely, the "3").

However, before the calculator program can execute (1) and (2) in the previous paragraph, the system first captures the GDI functions which the calculator program calls. This capture is illustrated in block GDI CAPTURE in Figure 15. During this capture, the system, in effect, does two things. One, it sends these GDI functions to CONNECTION API (for the other computers to use). At the user's Remote, CONNECTION API in Figure 15A directs the GDI functions to CAPTURED GDI DISPLAY, which replicates the Host's display. Two, it causes the GDI functions to be executed at the Host (via block GDI in Figure 15). Therefore, the general sequence of events is the following:
The Remote user attempts to press a calculator button.
The software running on the Remote detects this attempt, and sends data to the calculator program running on the host. The data takes the form of messages which the calculator program "thinks" come from the Host's mouse.
The calculator program performs as usual, and draws images on the Host display, via GDI calls.
The system captures the GDI calls, and informs the Remotes of them.
The Remotes replicate the Host's window. The Remote user thus can remotely operate the calculator program running on the Host.

Summarizing in a different way: mouse messages are generated at the Host, based on mouse messages at the Remote. The calculator program (running on the Host) responds to the mouse messages as though they were generated at the Host. The GDI calls made by the calculator program are intercepted, and executed at the Remote, thereby replicating the Host's display at the Remote.

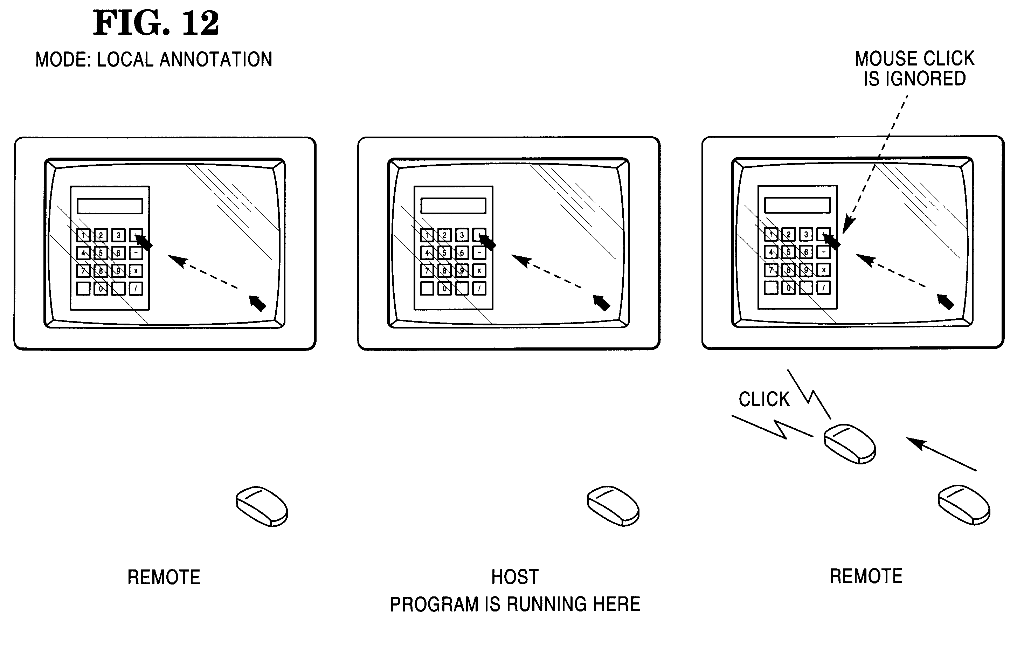

Referring to Figure 12, there is shown the situation where the host runs an application; the mode is "Local Annotation", the user input is at a remote computer, and the user attempts to operate the calculator. The user's mouse click is ignored. Nothing appears on the other displays in response to the mouse movement, because of failure to select a tool.

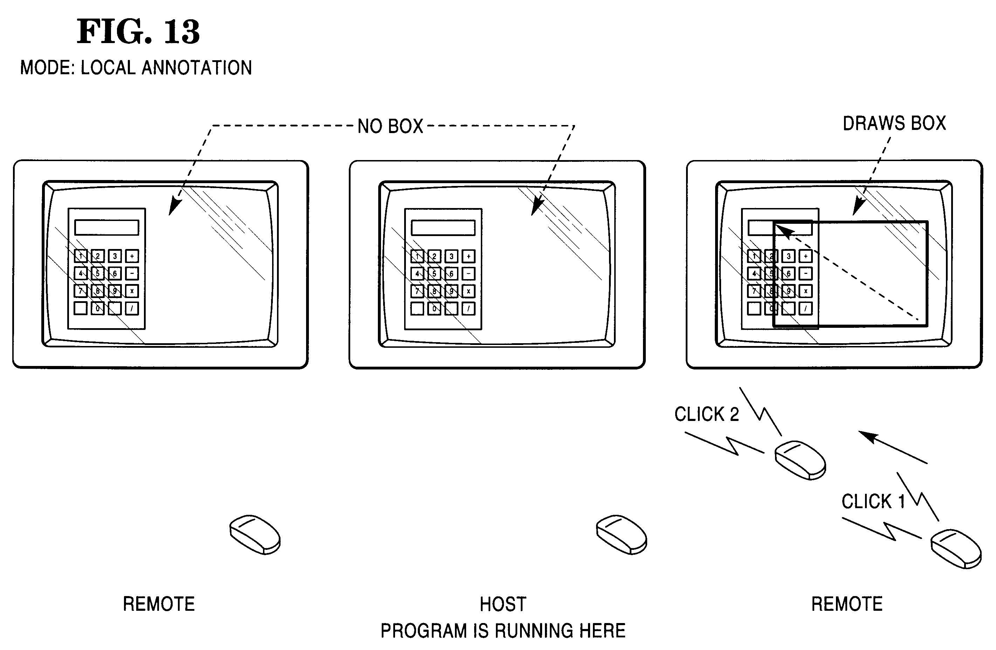

Referring to Figure 13, there is shown the situation where the host runs an application program; the mode is "Local Annotation"; the user input is at a remote computer; and the user attempts to annotate the calculator. The annotation is drawn on the user's display, as indicated. No annotation occurs on the other displays.

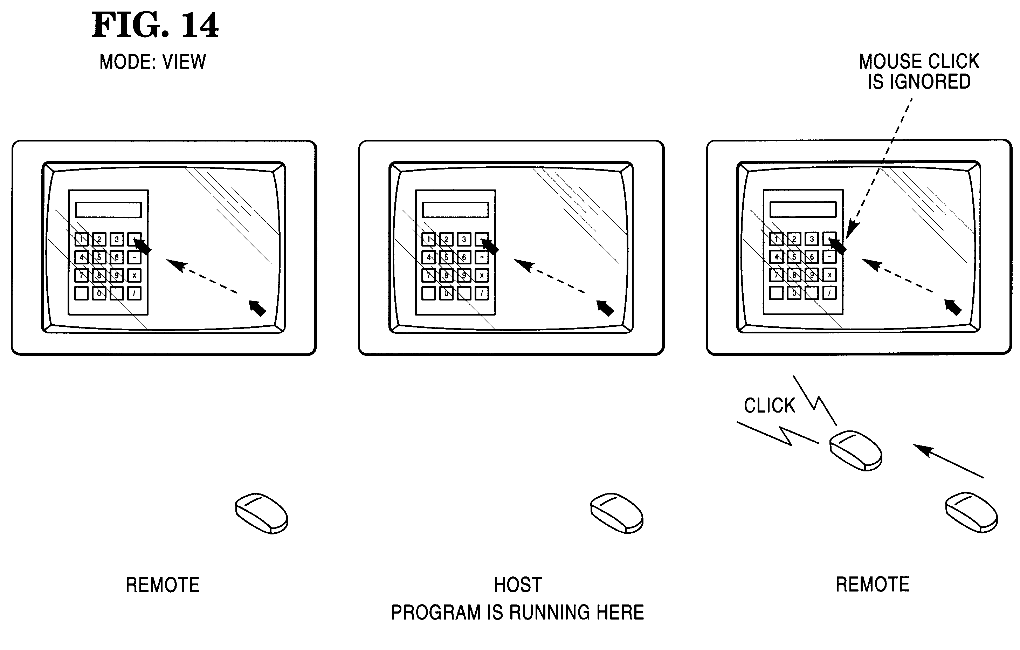

Referring to Figure 14, there is shown the situation where the host runs an application program; the mode is "View"; the user input is at a remote computer; and the user attempts to operate the calculator. As indicated, the mouse cursor moves at the user's display, but the mouse click is ignored. Further, the other two displays show the movement of the user's mouse cursor.

With regard to the above situation descriptions, the following points should be noted. The displays are drawn using GDI functions. However, different parts of a display are drawn by different programs.

Despite the fact that all these drawing operations are undertaken using GDI functions GDI functions are not the exclusive medium of communication between computers for replicating the displays. For example, when a user performs annotation, the user's mouse messages are replicated, as messages, at the other computers, via path 5 in Figure 15. These replicated messages then cause the respective ANNOTATION blocks (at the other computers) to issue the proper GDI calls for drawing the annotation. That is, GDI calls are not send directly from the user performing the annotation to the other computers.

In contrast, when an application program causes a graphic image to be drawn on a display, GDI calls are intercepted via GDI CAPTURE in Figure 15) and caused to be replicated on the other computers.

A major reason for the two different procedures (replicating mouse messages and replicating GDI calls) is that annotations are stored in memory at different locations than the display information. That is, returning to the calculator of Figure 2, the Application program stores the image of the calculator in the following general way. Annotation data is stored. Application program data is stored by the Application program (at the host). Each image of a key is stored as data from which a GDI function can draw the key. The data includes information such as position, size, color, and so on. Each key includes an associated number. The number can be stored as a text character, with information as to position, size, font type, and so on. Annotation data is stored at a different location, but in the same general way. If either the annotation or the Application program needs bitmaps, the bitmaps are stored in a conventional, known manner, by the GUI.

The annotation images are combined with the Application's images by the known technique of masking. That is, at a Remote, the received GDI functions are executed into a bitmap. The received annotation information is executed into a different bitmap. The two bitmaps are masked together. The annotation data is kept separate from the application data so that, for example, a user can save an Application image, but without annotations. Alternatively, a user can save annotation data alone, or save an annotated display.

As another example, keeping the annotation data separate facilitates drawing a display having no annotation data. If the annotation data were intermingled with the calculator image data, elimination of the annotation data would be difficult, if not impossible. If GDI calls were transmitted exclusively (ie. no message replication were undertaken), then extra effort would be required to construct annotation data for separate storage.

GDI interception can be understood as follows.
A. On start-up, the first five bytes of each GDI function are replaced with a JUMP instruction to a particular program, namely, Trap.GDI.
B. Trap.GDI gets the parameters for the desired graphics image (eg. in the case of a box, the locations of the two diagonal corners) and calls the sub-program PkgDispCall. Trap.GDI also replaces the first five bytes.
C. PkgDispCall accepts the parameters from Trap.GDI and generates an object structure. This object structure is a block of data containing everything necessary for the other computers to draw the box.
   For example, the object structure contains information as to size and position of the box. Further, the GUI draws images within a "context". The context includes things such as pen width, color, and other features. The contexts of the individual computers are tracked. If the context of the box drawn is different from the contexts of the remote computers, PkgDispCall includes data necessary for the other computers to create the correct contexts.
D. The object structure is shipped to the other computers, which then execute the same GDI functions.
E. The invention executed the original GDI functions.

The displays are not replicated bit-by-bit. For example, the image of the calculator in Figure 2 could be transferred between computers in bitwise fashion. If the calculator occupied a space of 200 x 300 pixels, then information regarding 60,000 (ie. 200 x 300) pixels must be sent.

Instead, the particular calculator image shown in Figure 2 is treated as eighteen rectangles, plus a text character for each of sixteen of the rectangles, giving a total of 34 objects. Each object requires parameters, such as size and position. The number of parameters is small, in the range of three to ten. Assuming ten parameters, then 340 pieces of data must be sent. Of course, the size of each piece depends on many factors, but a small number of bytes for each piece may be assumed.

Therefore, the 60,000 pieces of data needed for bitwise replication once reduced to 340 pieces maximum for object replication. Of course, some objects may take the form of bitmaps, and must be sent bit-by-bit. However, in general, bitmaps are expected to be rare. Further, it is expected that, in general, bitmaps, when sent, need be sent only once. Also, the object data is compressed when possible. That is, every transmission between computers is of compressed data, when possible. Compression is known in the art.

Communication among computers can take several forms. Commercially available networks, local and wide area, can be used. Commercially available ISDN telephone service, provided by local telephone companies, can be used. Modem communication can be used. There are commercially available packages which detect messages generated by the GUI in response to an input device. One such package is WINSIGHT, available from Borland International.

An alternative approach to the graphics capture described above is the following. The system-provided GDI is replaced by a separate procedure which processes GDI calls before calling the actual system GDI. The system GDI name is changed to prevent confusion between the two modules. The same technique is also used on USR.EXE to also capture GDI calls made through system-provided modules.

A given computer can act as a Host for one program and a Remote for another. For example, one computer can run a word processing program. Another computer can run a CAD drawing program. Each is Host for its respective program.

Since the software on each computer is identical, or substantially identical, all users can run either the word processing program or the CAD program, in the manner described above.

There are two types of "cursor". Each GUI generates its own "real" cursor. The real cursor is not generated by GDI functions, but by an independent function in the GUI. The reader can view the cursor as a bitmap which the GUI moves in response to mouse motion.

In addition to the real cursor, which is controlled by the local mouse, the system generates a "pseudo" cursor for each remote participant. The pseudo cursors are generated using GDI functions.

Sometimes a real cursor changes shape as the cursor moves. For example, it can take the form of an arrow when lying on a tool bar, and then change to a hand when lying on a client area. Sometimes this change is under the control of the Application program. Therefore, if Remote user is controlling an Application program running on a Host machine (as in Figure 11), the Application program may change the cursor on the Host machine, but without using GDI calls. Consequently, the GDI capture of Figures 15 and 15A will be ineffective to replicate the changes on the Remote display.

To confront this problem, the system watches for the functions which change the real cursor (eg. the SetCursor command). The cursor change is replicated on the Remote computer. One way is to execute the same SetCursor command. An alternative approach would be to change the Remote cursor by executing a proper sequence of GDI calls, or to draw a bitmap, when the Host cursor changes.

It should be understood that the system only replicates windows which the user of a display identifies. That is, the user can keep a workspace, such as a notepad, private during a conference. GDI calls use a task handle. If the task handle does not refer to a shared item, the GDI calls are not shared.

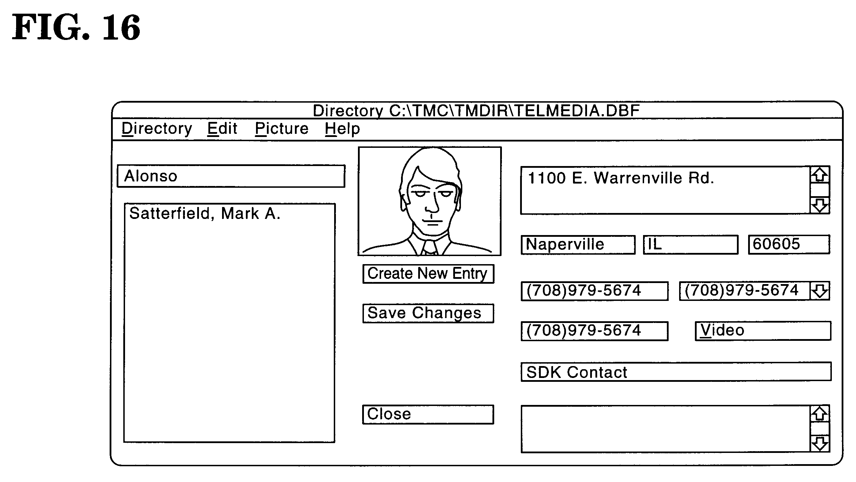

Referring now to Figure 16, there is shown a convenient way to create a telephone directory having entries of the type shown in Figure 16. An ordinary telephone directory provides a name, address, and telephone number for each telephone listed. Such data, plus additional information, is provided for each computer (or "station") which can establish a telephone conference with the computer at which the directory is located.

Further, the directory is held in a relational database. In a relational database, the information for each station is contained in a "record." Each record contains multiple fields. For example, the surname of the station owner occupies one field; the street address of the station occupies another field; the city occupies yet a third field; the telephone number of the station occupies a fourth field, and so on.

In the relational database, a user can select a specific field, and order a search through that field alone. For example, the user can limit the search to city-fields, and search (by computer) for the words "Kansas City." The database responds by identifying all stations located in Kansas City. (The results would include all cities named Kansas City, regardless of state, unless the user further restricted the search to a particular state.)

The present relational database has two further features, namely, (1) the ability to associate a picture with each entry and (2) the ability to generate the picture during a video conference. The picture will represent the primary person who uses the station represented by the entry, thus showing the person expected to be seen when a video conference is initiated. An example will illustrate one way to generate the picture. Assume that there are two parties using respective computers having respective video cameras associated therewith. One party, operating the "host" computer, makes a video call to the other. After the video link is established, each computer display shows a video image of the person located at the other computer.

A mouse button is provided on the host's display entitled "assign picture to directory." When the user presses this button, using the mouse, the current video frame shown on the display is captured, by capturing the contents of video memory. This capture is done by a Digital Video Driver, which is a computer program which uses local hardware, and which is called into action in response to the mouse button.

The Driver creates a Device Independent Bitmap (DIB), based on the contents of the video memory, and places this DIB into system memory. The Driver also stores this DIB into a temporary file located on a disc drive. DIB is a standard known in the art. The primary reason for making two copies of the DIB is that another program processes the DIB data. This other program cannot be given access to the region of system memory holding the DIB, because such access would disrupt the Driver's operation.

This other program, termed a database agent, scales the temporary file to an image of size 120 x 90 pixels, and then translates the image into a 24-bit JPEG image. (JPEG is an acronym for Joint Photographic Export Group, and represents a known format. JPEG images are display-independent.) The 24-bit JPEG image contains eight bits for each of the three colors red, green, and blue.

The JPEG image is stored in the video image field of the database record associated with the remote station's directory entry. Now, a picture of the person at the other computer has been stored in the other computer's directory entry.

A capture card (also called a video chipset), is utilized to interface with an ISDN telephone link, to capture incoming video data and convert it into a form usable by the computer software. This capture card is of the type called an expansion card, and is inserted into an expansion slot of a personal computer. Such cards are commercially available from AT&T Global Information Solutions Company having headquarters at 1700 South Patterson Blvd, Dayton, Ohio, 45479 under the designation TeleMedia Connection.

It will be appreciated that the term "relational database", is well defined to computer scientists. A relational database contains a collection of data, termed a "record," for each of entry in the database. Each station has an entry, and thus a record. There are multiple stations. Of course, if a given computer is under the control of a single user, then the station's record is, in effect, that person's record. This record is analogous to a person's entry in a telephone directory, with the exceptions that (a) there is more data for each record than there is in a telephone directory and (b) the database is relational, whereas a telephone directory is not.

Each record contains multiple fields, as discussed above. One field is allocated to a picture associated with the station corresponding to the record. This field contains the JPEG file. Because the database is relational, a user can pick a field, including the picture field, and run through the records from beginning to end. Thus, if a user forgets the name of a person whom the user wishes to contact, but remembers the face, the user can select the field containing the pictures, and examine the picture contained in each record. Of course, performing a text search of the picture field is not possible, but is possible for the fields which contain text information.

The process of loading one or more pictures into the database for every station will, of course, take a period of time. During this time, some records will contain pictures, and others will not. Further, it is likely that, for various reasons, some records will eventually contain no pictures. Still further, some records may contain multiple pictures. For example, a given station may be used by multiple persons. In this case, the records can be modified to contain multiple video-image fields. Therefore, it is not required that all records contain video images, or pictures, in the picture field.

The pictures need not be obtained exclusively in the manner described above. One alternative is to generate a JPEG image for a given record directly. JPEG images can be generated by digitizing a photograph, and processing the digitized data using known procedures. The JPEG image is stored into the video-image field of the proper record in a known manner. The JPEG image, or an equivalent image, can be called a digitized image, or digitized picture, of the person associated with the record.

The term "directory" should not be confused with the identical term, used in the computer art, but given a different meaning. The latter "directory" refers to a list of files contained on a disc drive; it is more like a table of contents. The present "directory" is not such a list of file names, but is more like a catalog which lists stations to which a computer can establish a video conference.

It will be appreciated that a user can generate a photo album, which also contains a telephone-directory-type listing for each photo. The term "photo" is a shorthand notation for "photograph," which means, literally, "light image." The term is not limited to paper images generated by a chemical photographic process. Further, the photo-album/telephone directory can be said to contain "pictures," even though the pictures are not directly visible to humans. Restated, the stored data from which the 120 x 90 image is generated can be called pictures, or picture-data.

An advantage of the described embodiment is that direct capture of the video stream into a relational database is effected. Furthermore, as well as being applied to video conferencing systems the described arrangement can be applied to a non-conference-capable computer, to generate a photo-telephone album, or a collection of photos for other purposes. Further, in a conference-capable computer, a photo-telephone album, or other collection of photos can be generated , for non-conference purposes.

## Claims

1. A method of operating a computer characterized by the steps of: establishing a database containing records of other computers with which said computer can communicate; and storing in said records data representing visual images of persons associated with the respective other computers.

2. A method according to claim 1, characterized in that said step of storing includes the steps of: establishing a video connection with another computer; capturing a segment of incoming video data from said another computer; and storing the captured segment of video data in said database in association with other data relating to said another computer.

3. A method according to claim 1 or claim 2, wherein said database is a relational database.

4. A method according to claim 2 or claim 3, characterized by the steps of: translating the captured video data into a predetermined format; and scaling the video data to be accommodated in a memory space of predetermined size.

5. A method according to claim 4, characterized by the steps of: storing a frame of received video data in a video memory; and copying at least part of the data stored in said video memory to a system memory of the computer, prior to said steps of translating and scaling.

6. A computer system including at least two interlinked computers, each adapted to carry out a method according to any one of the preceding claims.
